# EUROPEAN PATENT APPLICATION

(11) **EP 1 834 901 A1**
(43) Date of publication of application: **19.09.2007**
(21) Application number: 06114450.7
(22) Date of filing: 04.08.2006
(51) Int. Cl.: B65F 1/14, B60B 37/10

(54) **Axle for assembling wheels of a movable plastic waste container**

(30) Priority: 16.03.2006 CZ 200617536 U
(71) Applicant: Novex Kladno spol. s.r.o., 272 01 Kladno (CZ)
(72) Inventor: Cerník, Jan, 272 02 ladno (CZ)
(74) Representative: Kratochvil, Vaclav

(57) **Abstract**

The axle for assembling wheels of a movable plastic waste container is formed by an inside steel reinforcement (1) equipped with a plastic coating (2) the thickness of which equals 10% to 40% of the diameter of the inside reinforcement (1), while the axle ends have a proper setting (3) for the wheels.

## Description

### Technical Field

The invention pertains to the problematics of the axle-shaft used especially with the carriage wheels of the movable plastic waste containers assigned for the transport of communal and assorted waste.

### Background Art

For stowing away of the communal and/or assorted waste respectively, since many years, the containers made either of steel sheet or of plastic are assigned. First of all, the plastic and metallic containers of various volume, most frequently in volume of 60, 80, 120 and 240 Its.. are concerned. The containers produced of steel sheet do have most frequently the circular opening section and their complete imperfection is especially resulting from the fact that they are mostly not equipped with the rolling wheels, which makes their manipulation more difficult.

Containers produced of plastic are used much more frequently and they usually have square or oblong shape, and in their bottom - because of easy manipulation - they are equipped with the wheels set on the axle. The usual execution of the movable containers is based on the wheels with plastic discs and rubber tire. The axle is produced of the solid round steel in diameter of 21, 5 mms. The obvious disadvantage of this concept is not only the relatively high axle weight mass - on an average amounting to 1.400 grams per piece - but also the necessary very high production labor intensity and also - without any doubt - the thereof resulting extremely high price per one kilogram of the used raw material, i.e. round steel in this particular case. Further disadvantage of this traditional concept as a result is the necessity

of the subsequent need of the axle surface protection against corrosion executed by the process of galvanization. This process is however not only unfriendly to the environment, but also calls for the higher expenses on behalf of the health protection aids for the manipulating workers. The not neglectable disadvantage of this traditional concept furthermore is also the attachment of wheel to the axle itself - i.e. the combination of metallic/plastic coupling resulting consequently in the quicker wear-out process on the inside part of wheel that implies noise while revolving.

The disadvantage of such a concept results consequently not only in the more intensive and laborsome efforts in the course of machining process, but also in the much more bigger raw material consumption and after all also in the worse final appearance of the product etc., too.

The only positive aspect of the presently existing concept is just the high mechanical resistance of the axle, which is however in view of the real operational load evidently over-dimensional.

### Disclosure of Invention

The above mentioned imperfections of the present traditional concept are to the certain sense removed be the described innovated new axle execution according to this described design that is earmarked especially for the wheel carriage used with the movable plastic containers. The essentiality of the described technical concept of the innovated design is the fact that the axle in question is formed by the inside steel reinforcement covered by the plastic coating in thickness that equals to 0, 10 up to 0, 40 of the diameter of the inside steel reinforcement. The axle ends are equipped with the endings with setting for the wheels.

The used plastic material is composed of the HDPE-substance (High Density Poly-Ethylene) with the UV stabilizer, that disburdens the axle and at the same time meets the requirement for the service protection of the inside steel reinforcement against corrosion.

Just thanks to its favourable execution, the inside steel reinforcement penetrates under the wheel attachment. This reinforcement is advantageously made of the drawn round steel.

The advantage of the axle reinforced inside by steel as per the described technical design is the lower mass weight of the proper axle - the inside steel reinforcement has the diameter that equals approximately to the two thirds of the original, normal axle, while the total mass weight of the innovated axle amounts just to one half only - in the reality, round about 660 grams. In view of the reduction of the basic raw material consumption - i.e. of the round - steel - also the resulting price of the innovated axle is consequently reduced quite dramatically. Further advantage of this new, innovated type of axle is the fact that the user in this way gets rid of the necessity to protect the axle surface against corrosion. The in this way presented designed concept solution is evidently more friendly to the environment and consequently any expenses for the health protection of the workers manipulating with the axles will not arise. The attachment between the axle and the wheel is in this very case formed by two plastic component parts, so that the equable wear and tear of the mentioned both the parts occurs. Not neglectable is also the fact that thanks to the contacts of both the plastic component parts the resulting considerable noise reduction is quite remarkable. And lastly, also thanks to the surface coating made of plastic, the final appearance of such an innovated axle makes the better aesthetic impression.

The HDPE material containing the UV stabilizer is priced moderately, easily workable, ireproachable by its hygienic state, resistant against the mechanical damage and quite stabile from the qualitative point of view. And moreover, it is also quite simply recyclable.

The inside steel reinforcement is made of the currently obtainable rolled steel that owing to its used higher quality grade shows also the sufficient mechanical properties.

The inside steel reinforcement can even reach under the wheels of the wheels setting, however in view of the mechanical properties of the used plastic material it is quite possible to execute the setting outside the inside steel reinforcement.

The suggested design concept is consequently effective not only because of the mentioned price factor, but also because of the other factors, especially of the resulting weight mass of the innovated axle, because of the rough-and-finish working, service life, because it is friendly to the environment and as it makes also the good aesthetic impression, as well. The principal advantage we can consider in this respect also the possibility of its transportability double the quantity of the described innovated plastic axles in comparison with the presently existing wholemetallic axles that is to say, much on savings during manipulation and in the achievable frequency of the deliveries. In consideration of the numerous incoming enquiries covering oftentimes the range of millions of pieces of the axles in question, and this is to speak just about the European consumers, we can take into consideration even the savings in connection with the squeezing down the burden on the transport communications, not speaking certainly about the other consequences.

### Brief Description of Drawings

The axle concept, designed herewith especially for the application to the construction of the plastic waste containers carriage wheels as per the innovated technical dispositions will be described in details on basis of the concrete execution example as reflected in the attached picture demonstrating the respective axle in the front view.

### Best Mode for Carrying Out the Invention

The considered axle of the diameter amounting to 21,5 mms, designed for the carriage wheels for the movable plastic waste containers, is made of plastic having inside the steel reinforcement (No.1) formed by the round steel of the diameter amounting to 15 mms. The inside reinforcement (No.1) is covered by the coating (No.2) of the HDPE plastic material in thickness of 3, 25 mms. The plastic coating overlaps the steel reinforcement ends (No.1) where it should match the ending equipped with the setting (No.3). The HDPE plastic mass is composed of the material marked as EXXONMOBIL HMA 014 with the UV stabilizer. Tensile strength limit of this plastic coated axle as per these technical dispositions amounts to Rm 680 up to 700 MPa, which means the higher tensile than that one of the presently existing type of axle made of the solid steel material. The weight mass of the axle designed in full accordance with these technical dispositions amounts only to 660 grams in comparison to the fullmetallic axle having the weight mass of 1.400 grams. Considering the fact that the axle coated with plastic would pass through just the only production operation on the plastic injection press machine, the result is not only the considerable time saving, but also the following increased production capacity. In comparison with the fullmetallic axle, where the machining operation must be performed first on the turning lathes and thereafter with the following transfer of such a product to the galvanizing lines for finish processing, the introduction of the plastic coated axle designed in full accordance with the described concept of technical dispositions means huge savings in the great numbers of expenses items.

### Industrial Applicability

The axle designed as per these described technical dispositions as above will surely find its application in a very wide range of employments, but especially in production of wheel carriage of the movable plastic waste containers, both for communal and assorted waste. The allover the world waste quantity is increasing quite continuously and it is no doubt that the industrial region acting on this field will also be growing steadily, really in a massive way. The plastic coated axle with the inside steel reinforcement ranks with the unforgettable components of the containers with so called value added properties.

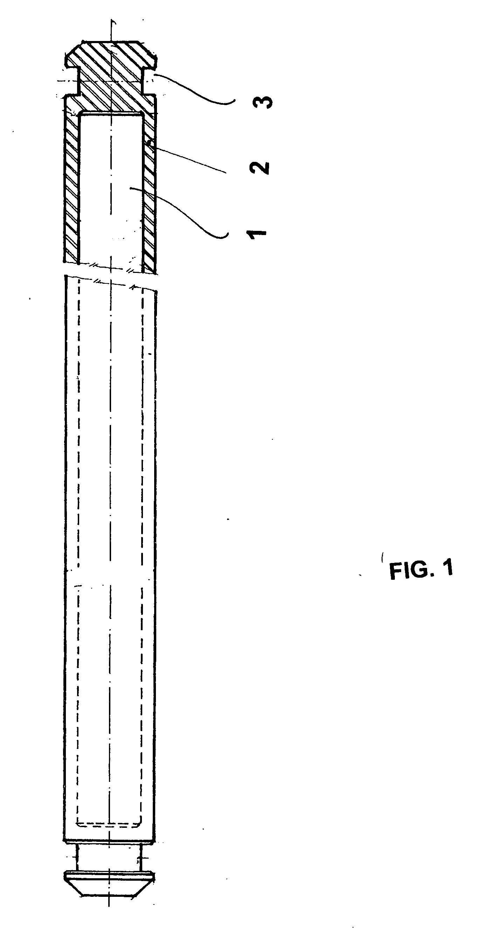

## Claims

1. The axle, as designed especially for the carriage wheels of the movable plastic waste containers, **characterized by** the fact that it is formed by the inside steel reinforcement (1) equipped with the plastic coating (2) the thickness of which equals to 0,10 up to 0,40 share of the inside reinforcement diameter (1), while the axle ends are equipped with the endings fitted with the proper setting (3).

2. The axle according to the above claim 1, **characterized by** the fact that the component part of the used plastic material is the ingredient of HDPE.

3. The axle according to any of the above claims is **characterized by** the fact that the inside steel reinforcement (1) is made of steel bar in the quality grade with tensile strength of Rm 400 up to 700 MPa.

4. The axle according to any of the claims is **characterized by** the fact that the inside steel reinforcement penetrates even under the setting (3).
